# EUROPÄISCHE PATENTSCHRIFT

(11) **EP 0 891 647 B1**
(45) Veröffentlichungstag und Bekanntmachung des Hinweises auf die Patenterteilung: **29.05.2002**
(21) Anmeldenummer: 98902952.5
(22) Anmeldetag: 12.01.1998
(51) Int. Cl.: H02K 23/66, G01D 5/14

(54) **ELEKTROMOTOR**
ELECTRIC MOTOR
MOTEUR ELECTRIQUE

(30) Priorität: 06.02.1997 DE 19704472
(43) Veröffentlichungstag der Anmeldung: 20.01.1999
(73) Patentinhaber: ROBERT BOSCH GMBH, 70442 Stuttgart (DE)
(72) Erfinder: WEBER, Matthias, D-76534 Baden-Baden (DE); RIEHL, Guenther, D-77830 Buehlertal (DE); SCHINDLER, Kurt, D-77855 Achern (DE); BOCK, Olaf, D-77815 Buehl (DE)
(86) Internationale Anmeldenummer: DE9800083
(87) Internationale Veröffentlichungsnummer: WO9835427

(56) Entgegenhaltungen:
- EP-A- 0 175 992
- EP-A- 0 359 853
- WO-A-96/24067
- DE-A- 4 005 709

## Beschreibung

Elektromotoren mit einem auf der Motorankerwelle drehfest angeordneten magnetischen Polrad als Signalgeber und einem zugeordneten gehäusefesten Signalaufnehmer sind allgemein bekannter Stand der Technik. Signalgeber und Signalaufnehmer wirken als Sensor zusammen, um beispielsweise die Drehrichtung, Drehzahl, Geschwindigkeit der Motorankerwelle und anderer Kenngrößen des Motorbetriebs zu erfassen.

In der WO 9624067A und in der EP-A-0 359853 sind jeweils ein Polrad an den Kollektor angrenzend angeordnet und von einem oder mehreren Hallsensoren überwacht. Die Hallsensoren sind direkt auf einer bis in den Bürstenbereich ragenden Elektronikplatte oder auf dem Bürstenhalter selbst montiert. So wird gewährleistet, dass Hallsensor und Polrad unmittelbar beieinander liegen. Zur Erhöhung der Magnetflußdichte wird in der WO 9624067A vorgeschlagen, ein Magnetflußführungselement derart anzuordnen, dass die Magnetfeldlinien im Bereich des Hallsensors konzentriert werden.

Dem bekannten Stand der Technik haftet der Nachteil an, dass die Hallsensoren zwar einerseits die vom magnetischen Polrad erzeugten wechselnden Polaritäten abgreifen und deshalb in deren Nähe angeordnet sein müssen, andererseits aber durch die Nähe zur Bürstenkollektoranordnung und den dadurch erzeugten Wechselfeldern gestört werden.

### Vorteile der Erfindung

Der Elektromotor mit den Merkmalen des Hauptanspruchs hat den Vorteil, dass der Magnetfeldsensor entfernt von dem magnetfelderzeugenden Mittel angeordnet sein kann und dennoch das Magnetfeld des felderzeugenden Mittels sicher detektiert. Durch die Anordnung der Signalleitmittel im wesentlichen entlang der Stromleitmittel wird das zu dem Magnetfeldsensor geleitete Feld nicht oder nur geringfügig durch das Magnetfeld des im Stromleitmittel fließenden Strom beeinflußt, wenn die Nutzmagnetisierungsrichtung, also die vom magnetfelderzeugenden Mittel herrührende Magnetisierung, entlang des Signalleitmittels verläuft. Durchgeführte Versuche haben gezeigt, daß beispielsweise während des Betriebes handelsüblicher Kleinmotoren mit Strömen von ca. 30 A in den stromleitenden Mitteln das die Ströme begleitende Magnetfeld Flußdichten in der Größenordnung von 20 mT besitzt. Dieses Störfeld kann - insbesondere beim Einschalten des Elektromotors - zu Fehlmessungen in dem Magnetfeldsensor führen. Durch die erfindungsgemäße Anordnung werden solche Fehlmessungen vermieden.

Nach einer Ausgestaltung der Erfindung bilden Stromleitmittel und Signalleitmittel jeweils eigene Bauteile. Die beiden Bauteile können beispielsweise in Sandwichbauweise angeordnet sein. Da das Stromleitmittel im wesentlichen entlang des Signalleitmittels angeordnet ist, verlaufen die Feldlinien des den Strom begleitenden Feldes senkrecht zu der Nutzmagnetisierungsrichtung. Dadurch kann das Nutzmagnetfeld bei geeigneter Magnetfeldsensorwahl und -anordnung gezielt ohne Überlagerung von Störfeldern ausgewertet werden.

In einer anderen Ausgestaltung der Erfindung ist das Stromleitmittel auf der Oberfläche des Signalleitmittels angeordnet. Da das Stromleitmittel das Signalleitmittel nahezu vollständig umschließt, ist das den Stromfluß begleitende Magnetfeld im Inneren des Signalleitmittels verschwindend klein (Faraday-Käfig-Effekt). Das Nutzmagnetfeld im Signalleitmittel wird deshalb kaum gestört.

Weitere vorteilhafte Weiterbildungen und Ausgestaltungen der Erfindung ergeben sich aus den weiteren abhängigen Ansprüchen und aus den Ausführungsbeispielen.

### Zeichnung

Es zeigen die Fig. 1a einen erfindungsgemäßen Elektromotor teilweise geschnitten, die Fig. 1b einen gegenüber der Fig. 1a um 180° gedrehten Ausschnitt eines Bürstenhalters des Elektromotors in Figur 1, Fig. 2 den Bürstenhalter des erfindungsgemäßen Elektromotors in Aufsicht, Fig. 3a ein erstes Ausführungsbeispiel eines entlang eines Signalleitmittels angeordneten Stromleiters in Aufsicht, Fig. 3b das erste Ausführungsbeispiel in Seitenansicht, Fig. 4a ein zweites Ausführungsbeispiel eines Signalleitmittels und eines Stromleitmittels in Aufsicht und Fig. 4b das zweite Ausführungsbeispiel in Seitenansicht.

### Beschreibung der Ausführungsbeispiele

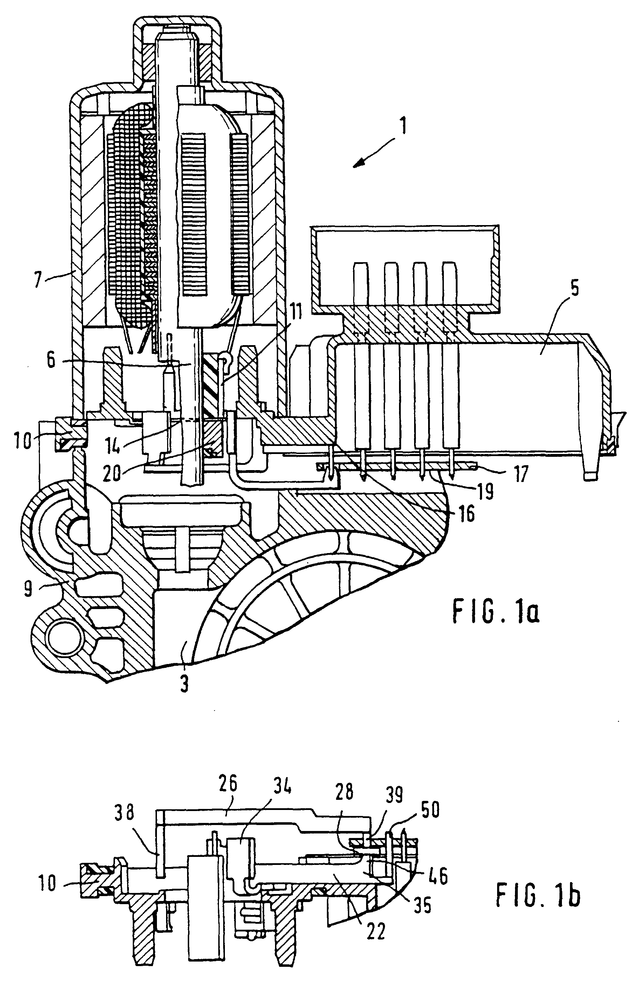

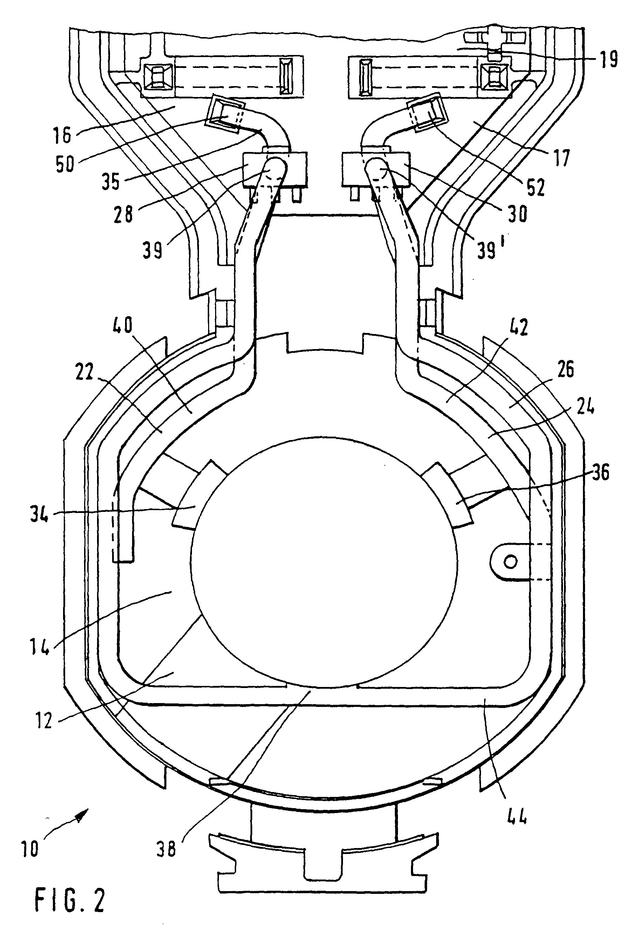

Die Figuren 1a und 1b zeigt einen erfindungsgemäßen Elektromotor 1 mit nachgeordnetem Getriebe 3 und einem Elektronikgehäuse 5. Eine Motorankerwelle 6 ist in das Getriebe 3 verlängert. Zwischen einem Motorgehäuse 7 und einem Getriebegehäuse 9 ist ein Bürstenhalter 10 angeordnet. Wie aus der Figur 2 ersichtlich ist, sind auf dem Bürstenhalter 10 Einschübe 12 (der Übersichtlichkeit halber ist nur einer von zwei tatsächlich vorhandenen Einschüben gezeigt) für nicht dargestellte Kohlebürsten angeordnet, die mit einem auf der Motorankerwelle angeordneten Kommutator 11 in elektrischem Kontakt stehen. Der Bürstenhalter 10 besteht aus einem Bürstenteil 14 und einem Elektronikteil 16 mit einer Elektronikplatine 17. Während der Bürstenteil 14 zwischen dem Motorgehäuse 7 und dem Getriebegehäuse 9 angeordnet ist, ragt der Elektronikteil 16 aus dem Motorgehäuse 7 heraus in das Elektronikgehäuse 5. Auf der Elektronikplatine 17 ist eine Motorleistungs- und Steuerungselektronik 19 integriert.

Auf der Motorankerwelle 6 ist ein magnetischer Polring 20 angeordnet. Der Polring 20 besteht je zur Hälfte aus einem Nord- und einem Südpol. An dem Bürstenhalter 10 sind drei magnetische Leiter 22, 24 und 26 angeordnet, die vom Bürstenteil 14 in den Elektronikteil 16 reichen. Auf dem Elektronikteil 16 des Bürstenhalters 10 sind zwei Hallsensoren 28 und 30 in Form integrierter Schaltkreise als Magnetfeldsensoren angeordnet.

Die Magnetleiter 22, 24 und 26 weisen Abgriffe 34, 36 und 38 auf, die das Signal des Polrings 20 als magnetfelderzeugendes Mittel aufnehmen. Im Fall der Magnetleiter 22 und 24 befinden sich die jeweiligen Abgriffe an dem einen Ende, im Fall des Magnetleiters 26 etwa in der Mitte des Bauteils. Ansätze 46 bzw. 48 an den anderen Enden 35 bzw. 37 der Magnetleiter 22 bzw. 24 sind auf der Elektronikplatine 17 vor den Hallsensoren 28 bzw. 30 angeordnet. Die beiden Enden 39, 39' des Magnetleiters 26 durchgreifen Bohrungen der Elektronikplatine 17 unter den Hallsensoren 28 bzw. 30; die Stirnseiten der Enden 39, 39' sind direkt an der Unterseite der Hallsensoren 28 und 30 angeordnet. Durch diese Anordnung bilden die Magnetleiter 22 und 26 sowie 24 und 26 jeweils einen nahezu geschlossenen magnetischen Kreis, und die Hallsensoren 28 und 30 werden fast vollständig von dem auf den Polring 20 zurückgehenden magnetischen Nutzfluß durchdrungen.

Die Übertragung der magnetischen Signale vom Polring 20 zu den Hallsensoren 28 und 30 soll am Beispiel des Magnetleiters 22 beschrieben werden: das Magnetfeld des Segments des Polrings 20, das dem Abgriff 34 räumlich am nächsten ist, magnetisiert den Abgriff 34 und damit den gesamten Magnetleiter. Es wird somit zu dem dem Abgriff 20 entgegengesetzten Ende 35 des Magnetleiters 22 geleitet. Da das Ende 35 des Magnetleiters 22 direkt vor dem Hallsensor 28 auf der Elektronikplatine 17 angeordnet ist, erfaßt der Hallsensor 28 somit das Magnetfeld des Polrings 20, obwohl er räumlich von dem Polring 20 entfernt ist.

Die Hallsensoren 28 und 30 wandeln die durch die Magnetleiter 22, 24 und 26 übertragenen Signale in digitale Signale um. Die Motorsteuerungselektronik 19 wertet die digitalen Signale zur Bestimmung der Drehzahl, der Umdrehungsrichtung, der Beschleunigung und anderer Parameter der Motorankerwelle mit Hilfe eines programmgesteuerten Mikroprozessors oder Mikrocontrollers aus.

Entlang der Magnetleiter 22 und 24 ist jeweils ein Stromleitmittel 40 und 42 angeordnet, das im wesentlichen parallel zu den Magnetleitern 22 bzw. 24 verläuft.

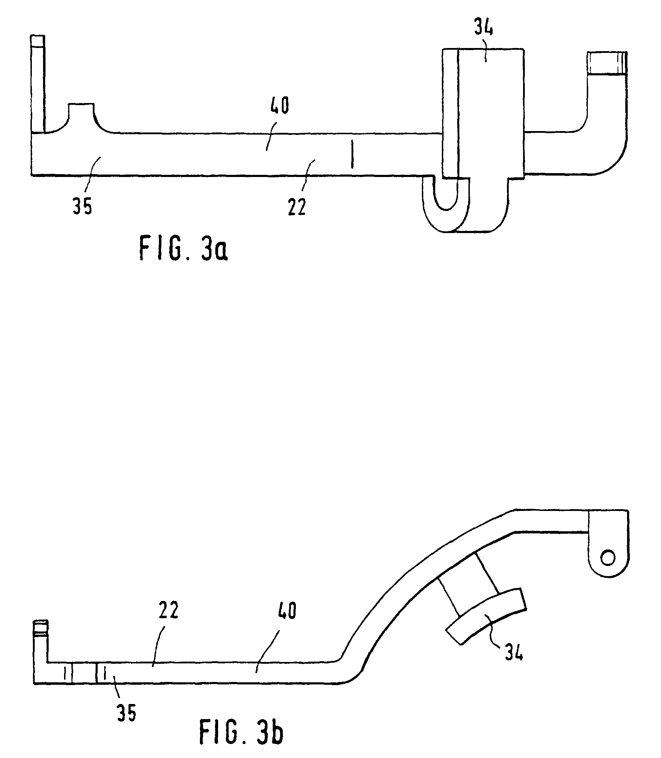

In einer ersten, in den Figuren 3a und 3b dargestellten und in der Anordnung nach den Figuren 1a, 1b und 2 verwirklichten Ausführungsform ist das Stromleitmittel 40 auf dem Magnetleitmittel 22 aufgetragen. Das Magnetleitmittel 22 besteht aus weichmagnetischem Stahl hoher Permeabilität, beispielsweise Stahl nach der DIN ST1203. Das Stromleitmittel 40 aus Kupfer ist in dieser Ausführungsform auf dem Magnetleitmittel galvanisch abgeschieden. Es kann aber auch aufgedampft oder durch ein anderes Verfahren auf der Oberfläche des Magnetleitmittels angeordnet sein. Zur Verbesserung der Leitfähigkeit ist auf die galvanisch abgeschiedene, relativ dünne Kupferschicht eine Zinnschicht solcher Stärke aufgetragen, daß der Widerstand des Stromleitmittels 40 gering im Vergleich zum Widerstand der Ankerwicklungen ist.

Selbstverständlich ist auch die umgekehrte Anordnung denkbar, d.h. daß das Magnetleitmittel 22 auf der Oberfläche eines kompakten Stromleitmittels angeordnet ist.

Das Stromleitmittel 40 ist mit einer ersten Bürste des Bürstenhalters 10, das Stromleitmittel 42 mit einer zweiten Bürste des Bürstenhalters 10 elektrisch leitend verbunden.

Das von den Bürsten jeweils abgewandte Ende 50 bzw. 52 der Stromleitmittel 40, 42 ist zu der Motorleistungselektronik auf der Elektronikplatine 17 geführt. Die erste und zweite Bürste werden also über die Stromleitmittel 40 bzw. 42 mit Strom versorgt.

Auch der Magnetleiter 26 ist mit einem Stromleitmittel 44 ummantelt. Das Stromleitmittel 44 steht mit der Motormasse in elektrischem Kontakt und schirmt so den Magnetleiter 26 gegen von außen kommende Störsignale weitgehend ab.

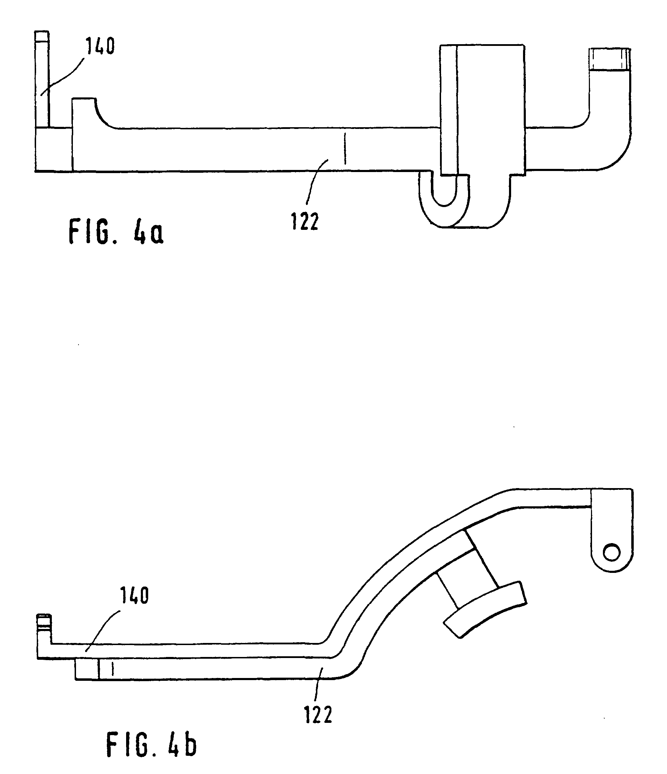

Eine zweite Ausführungsform des Stromleitmittels und des Magnetleiters ist in den Figuren 4a und 4b näher dargestellt. Stromleitmittel 140 und Magnetleitmittel 122 sind jeweils eigenständige Bauteile. Zwischen den beiden Bauteilen ist zur elektrischen Isolation eine Spritzhaut aus Kunststoff eingebracht, die bereits bei der Herstellung des Bürstenhalters eingespritzt wird. Das Stromleitmittel 140 besteht vollständig aus Kupfer, kann aber auch aus einem anderen elektrisch gut leitendem Material, beispielsweise Messing, hergestellt sein. Der Magnetleiter besteht wie im ersten Ausführungsbeispiel aus Stahl. Beide Bauteile werden im Stanzverfahren hergestellt und nach dem Stanzen in die in der Fig. 4a und Fig. 4b dargestellten Form gebogen.

## Patentansprüche

1. Elektromotor mit einem Sensor, insbesondere einem Drehzahlsensor, enthaltend wenigstens ein ein Magnetfeld erzeugendes Mittel (20) als Signalgeber, wenigstens einen Magnetfeldsensor (28, 30) als Signalaufnehmer, und Signalleitmittel (22, 24, 26), **dadurch gekennzeichnet, daß** die Signalleitmittel (22, 24, 26) magnetisch leitendes Material enthalten und das Signal des wenigstens einen magnetfelderzeugenden Mittels (20) zu dem wenigstens einen Magnetfeldsensor (28, 30) leiten, und daß wenigstens ein Stromleitmittel (40, 42, 44) im wesentlichen entlang des Signalleitmittels (22, 24, 26) angeordnet ist.

2. Elektromotor nach Anspruch 1, **dadurch gekennzeichnet, daß** das wenigstens eine Stromleitmittel (140) und das wenigstens eine Signalleitmittel (122) parallel angeordnet sind.

3. Elektromotor nach einem der vorhergehenden Ansprüche, **dadurch gekennzeichnet, daß** das wenigstens eine Stromleitmittel (140) und das wenigstens eine Signalleitmittel (122) abstandslos nebeneinander verlaufen.

4. Elektromotor nach einem der vorhergehenden Ansprüche, **dadurch gekennzeichnet, daß** zwischen Stromleitmittel und Signalleitmittel wenigstens ein elektrisch isolierendes Medium angeordnet ist.

5. Elektromotor nach einem der vorhergehenden Ansprüche, **dadurch gekennzeichnet, daß** Stromleitmittel (140) und Signalleitmittel (122) jeweils eigene Bauteile bilden.

6. Elektromotor nach einem der Ansprüche 1 bis 4, **dadurch gekennzeichnet**, das das Stromleitmittel (40, 42, 44) auf der Oberfläche des Signalleitmittels (22, 24, 26) aufgetragen ist.

7. Elektromotor nach Anspruch 6, **dadurch gekennzeichnet, daß** das Stromleitmittel (40, 42, 44) auf dem Signalleitmittel (22, 24, 26) galvanisch abgeschieden ist.

8. Elektromotor nach einem der vorhergehenden Ansprüche, **dadurch gekennzeichnet, daß** das Stromleitmittel (40, 140) aus Kupfer und das Signalleitmittel (22, 122) aus magnetisch leitendem Stahl besteht.

9. Elektromotor nach einem der vorhergehenden Ansprüche, **dadurch gekennzeichnet, daß** das wenigstens eine Stromleitmittel (40, 42) den Betriebsstrom des Elektromotors (1) führt.

10. Elektromotor nach Anspruch 9, **dadurch gekennzeichnet, daß** das wenigstens eine Stromleitmittel (40, 42) mit Bürsten des Elektromotors (1) verbunden ist.

11. Elektromotor nach einem der vorhergehenden Ansprüche, **gekennzeichnet durch** einen Bürstenhalter (10), an dem der wenigstens eine Signalaufnehmer angeordnet ist.

12. Elektromotor nach einem der vorhergehenden Ansprüche, **gekennzeichnet durch** einen Hallsensor (28, 30) als Signalaufnehmer.

13. Elektromotor nach einem der vorhergehenden Ansprüche, **dadurch gekennzeichnet, daß** der Magnetfeldsensor (28, 30) räumlich getrennt vom felderzeugenden Mittel (20) angeordnet ist.

14. Elektromotor nach einem der vorhergehenden Ansprüche, **dadurch gekennzeichnet, daß** der Magnetfeldsensor (28, 30) auf einer Elektronikplatine (17) angeordnet ist.

## Claims

1. Electric motor having a sensor, in particular a rotation speed sensor, containing at least one means (20), which produces a magnetic field, as a signal transmitter, at least one magnetic field sensor (28, 30) as a signal detector, and signal carrying means (22, 24, 26), **characterized in that** the signal carrying means (22, 24, 26) contain magnetically permeable material and carry the signal of the at least one means (20) that produce a magnetic field to the at least one magnetic field sensor (28, 30), and **in that** at least one current carrying means (40, 42, 44) is arranged essentially along the signal carrying means (22, 24, 26).

2. Electric motor according to Claim 1, **characterized in that** the at least one current carrying means (140) and the at least one signal carrying means (122) are arranged parallel.

3. Electric motor according to one of the preceding claims, **characterized in that** the at least one current carrying means (140) and the at least one signal carrying means (122) run alongside one another, without any gap.

4. Electric motor according to one of the preceding claims, **characterized in that** at least one electrically insulating medium is arranged between the current carrying means and the signal carrying means.

5. Electric motor according to one of the preceding claims, **characterized in that** the current carrying means (140) and the signal carrying means (122) each form autonomous components.

6. Electric motor according to one of Claims 1 to 4, **characterized in that** the current carrying means (40, 42, 44) are mounted on the surface of the signal carrying means (22, 24, 26).

7. Electric motor according to Claim 6, **characterized in that** the current carrying means (40, 42, 44) are electrochemically deposited on the signal carrying means (22, 24, 26).

8. Electric motor according to one of the preceding claims, **characterized in that** the current carrying means (40, 140) are composed of copper, and the signal carrying means (22, 122) are composed of magnetic permeable steel.

9. Electric motor according to one of the preceding claims, **characterized in that** the at least one current carrying means (40, 42) carry the operating current for the electric motor (1).

10. Electric motor according to Claim 9, **characterized in that** the at least one current carrying means (40, 42) are connected to brushes for the electric motor (1).

11. Electric motor according to one of the preceding claims, **characterized by** a brush holder (10) on which the at least one signal detector is arranged.

12. Electric motor according to one of the preceding claims, **characterized by** a Hall sensor (28, 30) as the signal detector.

13. Electric motor according to one of the preceding claims, **characterized in that** the magnetic field sensor (28, 30) is arranged physically separately from the field-producing means (20).

14. Electric motor according to one of the preceding claims, **characterized in that** the magnetic field sensor (28, 30) is arranged on an electronics board (17).

## Revendications

1. Moteur électrique comportant un capteur, notamment un capteur de vitesse de rotation, avec comme générateur de signal, au moins un moyen (20) générant un champ magnétique, au moins un capteur de champ magnétique (28, 30) comme récepteur de signal et des moyens de guidage de signal (22, 24, 26),
**caractérisé en ce que**
les moyens de guidage de signal (22, 22, 26) contiennent une matière conductrice magnétique et transmettent le signal d'au moins un moyen générant un champ magnétique (20) à au moins un capteur de champ magnétique (28, 30), et
au moins un moyen conducteur de courant (40, 42, 44) est prévu essentiellement le long du moyen de transmission de signal (22, 24, 26).

2. Moteur électrique selon la revendication 1,
**caractérisé en ce qu'**
au moins le moyen conducteur de courant (140) et au moins le moyen de transmission de signal (122) sont installés en parallèle.

3. Moteur électrique selon l'une quelconque des revendications précédentes.
**caractérisé en ce qu'**
au moins le moyen conducteur de courant (140) et au moins le moyen conducteur de signal (122) sont disposés directement l'un à côté de l'autre, sans intervalle.

4. Moteur électrique selon l'une quelconque des revendications précédentes,
**caractérisé par**
au moins un milieu isolant électrique entre le moyen conducteur de courant et le moyen de transmission de signal.

5. Moteur électrique selon l'une quelconque des revendications précédentes,
**caractérisé en ce que**
le moyen conducteur de courant (140) et le moyen de transmission de signal (122) constituent chaque fois leur propre composant.

6. Moteur électrique selon l'une quelconque des revendications 1 à 4,
**caractérisé en ce que**
le moyen conducteur de courant (40, 42, 44) est appliqué à la surface du moyen de transmission de signal (22, 24, 26).

7. Moteur électrique selon la revendication 6,
**caractérisé en ce que**
le moyen conducteur de courant (40, 42, 44) est déposé galvaniquement sur le moyen de transmission de signal (22, 24, 26).

8. Moteur électrique selon l'une quelconque des revendications précédentes,
**caractérisé en ce que**
le moyen conducteur de courant (40, 140) est en cuivre et le moyen de transmission de signal (22, 122) est en acier conducteur magnétique.

9. Moteur électrique selon l'une quelconque des revendications précédentes,
**caractérisé en ce qu'**
au moins le moyen conducteur de courant (40, 42) transmet le courant de fonctionnement du moteur électrique (1).

10. Moteur électrique selon la revendication 9,
**caractérisé en ce qu'**
au moins le moyen conducteur de courant (40, 42) est relié aux balais du moteur électrique (1).

11. Moteur électrique selon l'une quelconque des revendications précédentes,
**caractérisé en ce qu'**
un support de balais (10) comporte au moins un récepteur de signal.

12. Moteur électrique selon l'une quelconque des revendications précédentes,
**caractérisé en ce que**
le récepteur de signal est un capteur Hall (28, 30).

13. Moteur électrique selon l'une quelconque des revendications précédentes,
**caractérisé en ce que**
le capteur de champ magnétique (28, 30) est installé de manière séparée dans l'espace du moyen générant le champ (20).

14. Moteur électrique selon l'une quelconque des revendications précédentes,
**caractérisé en ce que**
le capteur de champ magnétique (28, 30) est monté sur une platine électronique (17).
